# FASCICULE DE BREVET EUROPEEN

(11) **EP 2 476 924 B1**
(45) Date de publication et mention de la délivrance du brevet: **24.07.2013**
(21) Numéro de dépôt: 12151016.8
(22) Date de dépôt: 13.01.2012
(51) Int. Cl.: F16C 3/02, F16B 7/04

(54) **Arbre de transmission de mouvements et/ou d'efforts en rotation, et procédé de fabrication d'un tel arbre**
Welle zur Übertragung von Drehbewegungen und/oder Drehkräften und Herstellungsverfahren derselben.
Shaft for transmitting rotational movements and/or forces and method of manufacturing the same.

(30) Priorité: 14.01.2011 FR 1150314
(43) Date de publication de la demande: 18.07.2012
(73) Titulaire: SKF Aerospace France, 26240 Saint-Vallier-sur-Rhône (FR)
(72) Inventeur: Buchin, Jean-Michel, 39000 Lons Le Saunier (FR)
(74) Mandataire: Myon, Gérard Jean-Pierre

(56) Documents cités:
- EP-A1- 0 628 400
- EP-A1- 0 668 446
- US-A- 4 605 385
- US-A- 4 681 556
- US-A- 4 704 918

## Description

La présente invention concerne un arbre de transmission de mouvements et/ou d'efforts en rotation, également appelé de manière courante arbre de torsion. L'invention concerne également un procédé de fabrication d'un tel arbre.

Le domaine de l'invention est plus particulièrement celui des arbres en matériau composite. De manière connue, un tel arbre composite comprend un corps formé d'une matrice en matière plastique, notamment une résine thermoplastique ou thermodurcissable, intégrant des éléments de renfort mécanique, notamment des fibres.

Ce type d'arbre est utilisé dans les industries aéronautiques et automobiles pour supporter différents ensembles mécaniques fonctionnels, actionnés ou sollicités lors de l'entraînement en rotation de l'arbre. Par exemple, un tel arbre peut être utilisé pour déployer des volets de bord d'attaque et de bord de fuite d'ailes d'avion, afin d'en augmenter la portance, ou pour orienter des loquets de portes d'avion, afin de permettre l'ouverture et la fermeture de ces portes. Selon un autre exemple, un tel arbre peut constituer une colonne de direction automobile.

En pratique, pour éviter de dégrader le matériau composite du corps, les mécanismes précités ne sont pas directement supportés par le corps, mais par des inserts tubulaires métalliques fixés aux extrémités longitudinales du corps et assurant la liaison mécanique entre le corps et les mécanismes, comme par exemple dans les documents US-A-4 681 556 et EP-A-0 668 446. Cependant, lors de la torsion de l'arbre, et donc de la transmission d'efforts par l'insert entre le corps et les mécanismes, l'arbre subit de fortes contraintes dans une zone d'interface entre chaque insert et le corps. Ces contraintes incluent notamment une composante de cisaillement et, sur une période de temps prolongée, sont susceptibles de provoquer une dégradation de la matrice plastique dans la zone d'interface avec l'insert.

Par ailleurs, suite à leur fabrication, certains arbres de torsion présentent une quantité réduite de fibres dans la zone d'interface entre le corps et le ou les inserts, de sorte qu'un affaiblissement de l'arbre en fonctionnement peut être observé dans cette zone.

Le but de la présente invention est donc de proposer un arbre de transmission composite dont les performances mécaniques en torsion sont améliorées, en particulier dans la zone d'interface entre le corps et le ou les inserts.

A cet effet, l'invention a pour objet un arbre de transmission de mouvements et/ou d'efforts en rotation, tel que défini à la revendication 1.

Ainsi, l'invention permet d'améliorer la tenue mécanique de l'arbre de torsion et la répartition des fibres de renfort, en particulier au niveau de ses extrémités recevant l'essentiel des contraintes en fonctionnement. Lors de la fabrication de l'arbre, la présence des pions permet de maintenir les fibres de renfort dans la zone d'interface, de manière à éviter que ces fibres de renfort soient réparties de manière non satisfaisante dans cette zone. En fonctionnement, lorsque l'arbre transmet des mouvements et/ou des efforts en rotation, les pions retiennent les fibres et minimisent les contraintes transmises à la résine, ce qui augmente la durée de vie de l'arbre.

D'autres caractéristiques avantageuses de l'arbre selon l'invention, prises isolément ou en combinaison, sont définies aux revendications 2 à 6.

L'invention a également pour objet un procédé de fabrication d'un arbre de transmission de mouvements et/ou d'efforts en rotation, tel que défini à la revendication 7.

D'autres caractéristiques avantageuses du procédé selon l'invention, prises isolément ou en combinaison, sont définies aux revendications 8 à 10.

L'invention sera mieux comprise à la lecture de la description qui va suivre, donnée uniquement à titre d'exemple non limitatif et faite en référence aux dessins sur lesquels :
- les figures 1 et 2 sont des représentations schématiques d'un arbre de torsion existant, non conforme à l'invention ;
- la figure 3 est une vue en élévation, incluant une coupe partielle sur son côté droit, d'un arbre conforme à l'invention, en début de fabrication ;
- la figure 4 est une vue en élévation d'un insert équipant l'arbre de la figure 3 ;
- la figure 5 est une vue selon la flèche V à la figure 4 ;
- la figure 6 est une vue analogue à la figure 3, montrant l'arbre en cours de fabrication ;
- la figure 7 est une vue analogue à la figure 3, montrant l'arbre lorsque sa fabrication est terminée ;
- la figure 8 est une vue en perspective partielle d'un deuxième mode de réalisation d'un arbre conforme à l'invention ;
- la figure 9 est une vue en élévation de l'arbre selon la flèche IX à la figure 8 ;
- la figure 10 est une coupe selon la ligne X-X à la figure 9 ;
- la figure 11 est une coupe selon la ligne XI-XI à la figure 9 ;
- la figure 12 est une coupe selon la ligne XII-XII à la figure 9 ;
- la figure 13 est une vue en perspective partielle du corps de l'arbre des figures 8 à 12;
- la figure 14 est une vue en perspective à plus grande échelle selon la flèche XIV à la figure 13 ;
- la figure 15 est une vue en élévation de l'insert équipant l'arbre des figures 8 à 12 ; et
- la figure 16 est une coupe selon la ligne XVI-XVI à la figure 15.

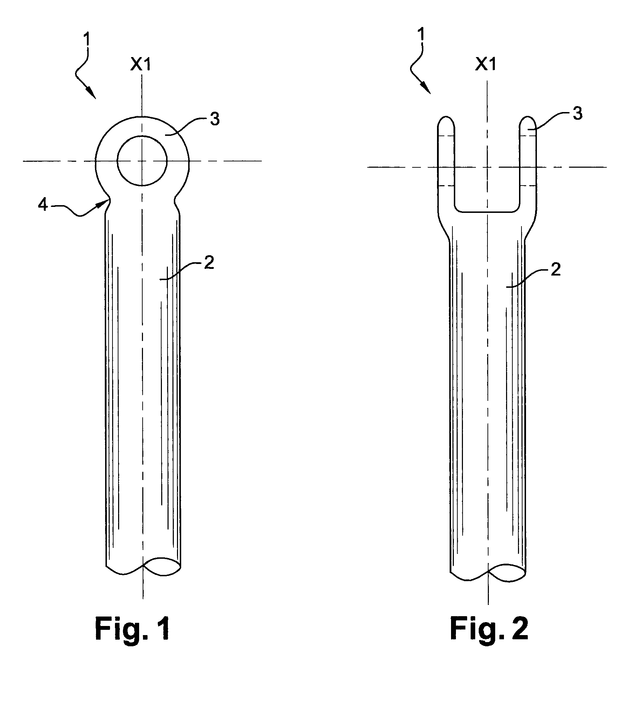

Sur les figures 1 et 2 est représenté un arbre de torsion 1 existant, que la présente invention vise à améliorer.

L'arbre 1 comprend un corps allongé 2 en matériau composite, incluant notamment une matrice plastique et des fibres de renfort. Le corps 2 est solidaire d'un insert d'extrémité 3 en matériau métallique, avec une zone d'interface 4 entre le corps 2 et l'insert 3. L'arbre 1 présente dans la zone 4 un affaiblissement qui est dû, d'une part, à un manque de fibres de renfort et, d'autre part, à la transition entre le matériau composite du corps 2 et le matériau métallique de l'insert 3, de sorte que les performances mécaniques en torsion de l'arbre 1 ne sont pas satisfaisantes. En particulier, la résistance de l'arbre 1 lors d'un fonctionnement prolongé est insuffisante.

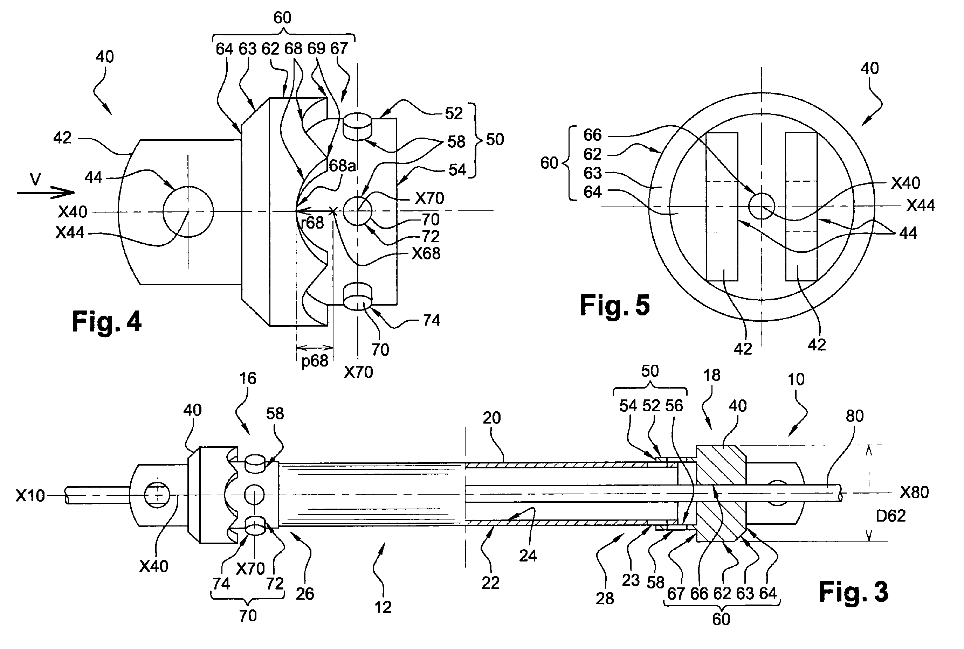

Sur les figures 3 à 7 est représenté un arbre de torsion 10 conforme à l'invention.

L'arbre 10 comprend un corps 12, incluant un tube 20 et un ensemble composite 30, deux inserts d'extrémité 40 et plusieurs pions 70.

Le corps 12 est allongé suivant un axe longitudinal X10 entre deux extrémités 16 et 18. Ce corps 12 est constitué par l'ensemble composite 30 formé autour du tube 20, comme détaillé ci-après en lien avec les figures 3, 6 et 7.

Comme montré à la figure 3, le tube 20 est allongé suivant l'axe longitudinal X10 entre deux extrémités 26 et 28. Le tube 20 comporte une surface cylindrique extérieure 22 et un alésage intérieur 24, centrés sur l'axe X10. Le tube 20 comporte également des orifices 23 de réception des pions 70, qui traversent le tube 20 entre la surface 22 et l'alésage 24, radialement à l'axe X10, au niveau de ses extrémités 26 et 28. Le tube 20 est rigide, fabriqué de préférence en métal ou en alliage métallique, notamment en aluminium ou en alliage métallique fusible à bas point de fusion. En alternative, le tube 20 peut être fabriqué en plastique rigide.

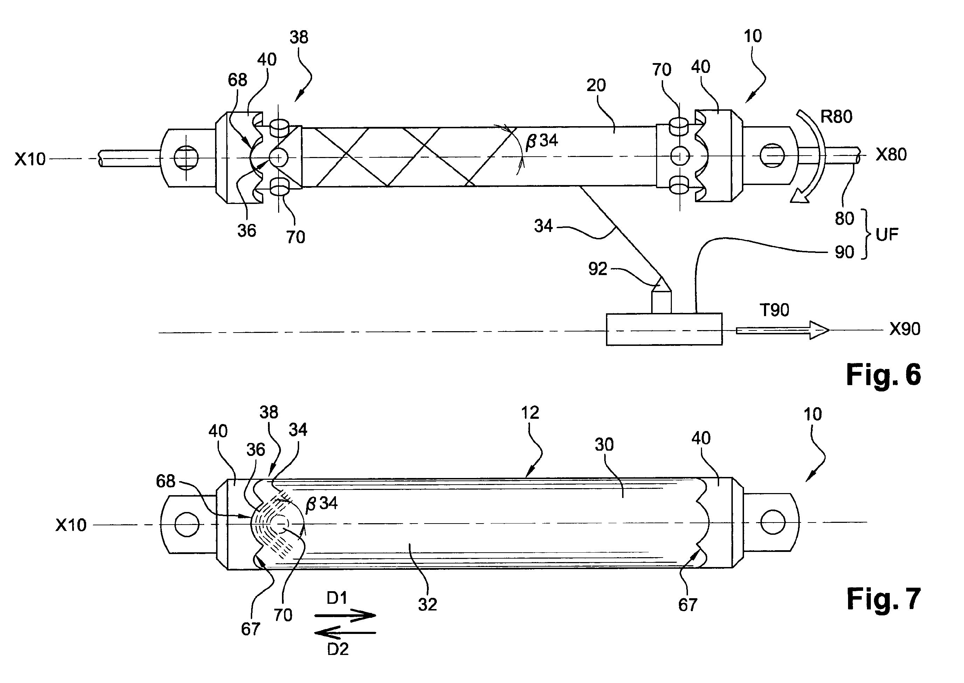

Comme montré aux figures 6 et 7, l'ensemble composite 30 comprend une matrice plastique 32, notamment en résine époxy ou thermoplastique de type polyéthylénimine PEI, polysulfure de phénylène PPS ou polyétheréthercétone PEEK, ainsi que des éléments de renfort 34, notamment des fibres de carbone, verre, aramide ou végétales. L'ensemble 30 est formé autour du tube 20, avec les fibres 34 qui sont intégrés dans la résine 32. L'ensemble composite 30 coopère avec chacun des inserts 40 au niveau d'une zone d'interface 38, de manière à solidariser le corps 12 de l'arbre 10 avec chaque insert 40. Dans cette zone 38, les fibres 34 présentent un enroulement 36 autour des pions 70.

Comme montré en particulier aux figures 3, 4 et 6, les pions 70 sont au nombre de six, répartis radialement autour de l'insert 40, dans la zone d'interface 38 avec l'ensemble composite 30. Chaque pion 70 présente une forme cylindrique allongée suivant un axe X70, avec une surface cylindrique extérieure 72 et une extrémité 74. Comme détaillé ci-après, chaque insert 40 peut comprendre un nombre différent de pions 70.

Comme montré aux figures 3 à 5, l'insert 40 comprend une partie tubulaire 50 et une partie annulaire 60, centrées sur un axe longitudinal X40 de l'insert 40. Du côté opposé axialement à la partie tubulaire 50, l'insert 40 comprend également des branches 42 munies d'orifices 44, permettant de relier l'arbre 10 à un mécanisme non représenté. Les branches 42 s'étendent parallèlement de part et d'autre de l'axe X40, tandis que les orifices 44 traversent les branches 42 suivant un axe X44 perpendiculaires à l'axe X40. L'insert 40 est rigide, fabriqué de préférence en métal ou en alliage métallique, notamment en aluminium, acier, acier inoxydable ou titane. En alternative, l'insert 40 peut être en matière plastique.

En variante non représentée, l'insert 40 peut présenter sans restriction toute forme adaptée à la présente application. En particulier, la forme extérieure de l'insert 40, correspondant aux branches 42 sur les figures 3 à 7, est adaptée à l'interface du mécanisme coopérant avec l'arbre 10.

La partie tubulaire 50 comporte une surface cylindrique extérieure 52 et un alésage intérieur 56, qui sont centrés sur l'axe X40 et reliés par une surface annulaire radiale 54 du côté opposé axialement aux branches 42. La surface 52 présente un diamètre extérieur D52. La partie tubulaire 50 comporte également des orifices 58 de réception de pions 70, qui traversent l'insert 40 entre la surface 52 et l'alésage 56, radialement à l'axe X40, au niveau de la zone d'interface 38.

Lorsque le pion 70 traverse le tube 20 et la partie tubulaire 50 de l'insert 40, la surface 72 est ajustée dans les orifices 23 et 58, tandis que l'extrémité 74 s'étend en saillie radiale hors de cet orifice 58 et de la surface 52, permettant ainsi l'enroulement 36 des fibres 34 sur cette extrémité 74.

La partie annulaire 60 comporte une surface cylindrique extérieure 62 et un alésage intérieur 66, qui sont centrés sur l'axe X40 et reliés par une surface tronconique 63 et une surface annulaire radiale 64. La surface 62 présente un diamètre extérieur D62 qui est supérieur au diamètre D52. En outre, la partie annulaire 60 présente un côté 67 tourné vers la partie tubulaire 50 et la zone d'interface 38 suivant la direction axiale de l'insert 40.

En pratique, le côté 67 comporte des éléments crénelés 68 et 69, c'est-à-dire une succession régulière de formes en creux 68 et de formes en saillies 69. Plus précisément, ces éléments crénelés consistent en des évidements 68 et des contreforts 69, répartis en alternance suivant la périphérie de l'insert 40. Chaque évidement 68 ménagé dans la partie annulaire 60 de l'insert 40 est aligné, suivant la direction axiale X40, avec l'un des orifices 58 délimités radialement dans la partie tubulaire 50 de l'insert 40 et prévus pour recevoir les pions 70. Ainsi, chaque évidement 68 est configuré pour recevoir au moins une partie de l'enroulement 36 des fibres 34 autour du pion 70 positionné en regard de cet évidement 68, de manière à maintenir axialement et/ou tangentiellement les fibres 34 entre l'évidement 68, les contreforts 69 et le pion 70 dans la zone d'interface 38 lorsque des efforts sont exercés sur l'arbre 10. Ce maintien axial des fibres 34 permet de bloquer le mouvement de ces fibres 34 dans une direction de rotation de l'arbre 10, les fibres 34 étant bloquées par le pion 70 dans l'autre direction de rotation de l'arbre 10.

De préférence, chaque évidement 68 délimite une surface cylindrique concave 68a, dont l'axe X68 est parallèle à l'axe X70 du pion 70 voisin, associé à cet évidement 68. Cette surface cylindrique 68a présente également un rayon r68 mesuré depuis l'axe X68, et une profondeur p68 mesurée suivant la direction axiale X40 de l'insert 40 depuis un bord de l'évidement 68 menant au contrefort 69. En particulier, la profondeur p68 de l'évidement 68 est inférieure au rayon r68 de la surface 68a.

La fabrication de l'arbre 10 à l'aide d'une unité de fabrication UF est décrite ci-après, notamment en lien avec les figures 3, 6 et 7.

Comme montré à la figure 3, cette unité de fabrication UF comporte une broche 80 mobile suivant un mouvement de rotation R80 autour d'un axe de rotation X80, ainsi qu'un chariot 90 mobile suivant un mouvement de translation T90 dans une direction d'axe X90 parallèle à l'axe X80.

Tout d'abord, chaque insert 40 est fixé à une extrémité 26 ou 28 du tube 20. Plus précisément, le tube 20 est emmanché dans l'insert 40, avec la surface 22 ajustée dans l'alésage 56. A ce stade, les axes X10 et X40 sont confondus.

En alternative, le tube 20 peut être assemblé avec des organes d'outillage de production qui sont conformés comme le ou les inserts 40, mais qui sont distincts du ou des inserts 40 finalement utilisés lorsque l'arbre 10 est en fonctionnement. Par exemple, un tel organe d'outillage peut être une réplique de l'insert 40 final, cette réplique étant fabriquée dans un matériau moins coûteux tel que du bois ou du plastique. Selon un autre exemple, la broche 80 peut être munie d'un mandrin conformé comme l'insert 40.

Autrement dit, un organe d'extrémité au moins est positionné à l'une des extrémités du tube 20. Cet organe peut être une configuration particulière de l'insert 40, une réplique de l'insert 40 ou un mandrin conformé comme l'insert 40. Dans un but de simplification, on considère par la suite l'insert 40 en tant qu'organe d'extrémité.

La broche 80 est ensuite introduite dans l'alésage 66 du premier insert 40, traverse le tube 20 à l'intérieur de l'alésage 24, puis traverse l'alésage 66 du deuxième insert 40. Le diamètre extérieur de la broche 80 est prévu pour être ajusté dans les alésages 80. A ce stade, les axes X10, X40 et X80 sont confondus. L'unité UF comporte également des éléments, non représentés, de liaison en rotation des inserts 40 avec la broche 80.

Comme montré à la figure 6, la rotation R80 de la broche 80 entraîne la rotation de l'arbre 10 autour de l'axe X80. Le chariot 90 de l'unité UF, d'une part, comporte une tête 92, configurée pour libérer en continu une longueur de fibres 34 et, d'autre part, est mobile en translation T90 suivant l'axe T90 lorsque la broche 80 est mobile en rotation R80. Ainsi, l'unité UF permet de positionner les fibres 34 autour du tube 20, selon le principe de l'enroulement filamentaire, connu en soi.

En particulier, les fibres 34 sont enroulées autour du tube 20 en formant une hélice inclinée d'un angle d'enroulement β34 par rapport à l'axe longitudinal X10 du tube 20. De préférence, comme l'arbre 10 est un arbre de torsion destiné à supporter des sollicitations correspondantes, l'angle β34 d'enroulement de fibres 34 dans la partie courant du tube 20 est égal à 45°. En alternative, l'angle β34 peut être compris entre 20 et 70°, en fonction de la vitesse de déplacement relatif de la broche 80 et du chariot 90.

Par ailleurs, dans la zone d'interface 38, l'enroulement 36 des fibres 34 forme un « demi-tour » sur la partie tubulaire 50 des inserts 40. En effet, au niveau de la zone 38, le chariot 90 change de sens de translation T90, tandis que la broche 80 maintient sa rotation R80. A cet effet, l'unité UF doit être configurée avec la précision requise pour que chaque enroulement 36 soit formé autour de la surface 72 du pion 70, entre ce pion 70 et l'évidement 68 correspondant.

Autrement dit, le placement de fibres 34 implique de faire varier l'angle d'enroulement β34 entre la partie courante du tube 20 et la zone d'interface 38. Dans ces conditions, l'angle β34 est compris entre 1 et 90° durant le procédé de fabrication.

Enfin, lorsqu'une quantité désirée de fibres 34 est enroulée sur le tube 20 et les inserts 40, la tête 92 stoppe son alimentation en fibres 34 et l'arbre 10 peut être retiré de la broche 80. L'arbre 10 est alors introduit dans une machine de moulage, non représentée, de l'unité UF.

Comme montré à la figure 7, dans la machine de moulage de l'unité UF, la matrice de résine 32 est formée autour de la surface 22 du tube 20 et autour de la surface 52 des inserts 40, entre les côtés 67 dans la direction axiale de l'arbre 10, en intégrant les fibres 34. Lorsque la résine 32 sèche en emprisonnant les fibres 34, ces éléments 32 et 34 forment l'ensemble composite 30 tubulaire et rigide. Cet ensemble composite 30 et le tube 20 forment alors le corps 12 de l'arbre 10. La configuration des inserts 40, notamment des orifices 58 et des évidements 68, assure une bonne orientation des fibres 34 et un confinement de la résine 32 en cas de sollicitation de l'arbre 10.

A titre d'exemple, l'ensemble composite 30 utilisé pour fabriquer l'arbre 10 est constitué d'une matrice de résine époxy 32 présentant un module d'élasticité longitudinale de l'ordre de 4 GPa, tandis que les fibres de carbone 34 présente un module de l'ordre de 200 à 250 GPa. Comme les fibres 34 ont un module très supérieur à celui de la résine 32, ce sont ces fibres 34 qui assurent la rigidité de l'ensemble composite 30, notamment lors du fonctionnement de l'arbre 10. Plus précisément, les fibres 34 ont un comportement optimal en traction et en compression, alors que la résine 32 n'a un bon comportement mécanique qu'en compression. Autrement dit, l'arbre 10 est conçu pour que la résine 32 soit sollicitée uniquement en compression.

En pratique, la bonne tenue mécanique de l'ensemble composite 30 est assurée par la présence des fibres 34 dans la zone d'interface 38, ainsi que par le travail uniquement en compression de la résine 32.

En alternative, le corps composite 12 de l'arbre 10 peut être fabriqué suivant un procédé de fabrication différent sans sortir du cadre de l'invention. En particulier, l'ensemble composite 30 peut être formé alors que l'insert 40 et les pions 70 ne sont pas placés aux extrémités 26 et 28 du tube 20. Par exemple, l'ensemble composite 30 peut être formé par enroulement de fibres 34 puis moulage de résine 32 sur un outillage de production prévu à cet effet. Ensuite, postérieurement à la fabrication du corps 12, le ou les inserts 40 peuvent être intégrés à l'arbre 10. Ainsi, différents types d'inserts 40 sont interchangeables. Suivant un autre exemple, l'ensemble composite 30 peut être formé sans utiliser de tube 20.

Par la suite, on considère l'insert 40 situé du côté gauche de la figure 7.

Lorsque l'arbre 10 est sollicité en torsion, les fibres 34 sont sollicitées en traction suivant une direction D1, ou en compression suivant une direction D2.

Lorsque les fibres 34 sont sollicitées en traction suivant D1, elles ont tendance à migrer vers le pion 70. La présence de ce pion 70 retient alors l'enroulement 36 des fibres 34 et entraîne une compression de la résine 32.

Lorsque les fibres 34 sont sollicitées en compression suivant D2, elles ont tendance à migrer vers le côté 67. L'enroulement 36 des fibres 34 est confiné entre l'évidement 68, les contreforts 69 et le pion 70, en étant comprimé contre la surface 68a de l'évidement 68. Alors que les fibres 34 sont maintenues en place dans la zone 38, la résine 32 est comprimée contre les éléments crénelés 68 et 69.

Ainsi, quel que soit le sens de torsion de l'arbre 10, mais également la mise en traction ou en compression de l'arbre 10, les éléments constitutifs de l'ensemble composite 30 sont sollicités dans leur domaine de travail : les fibres sont sollicitées en traction ou compression, tandis que la résine est toujours sollicitée en compression. L'arbre 10 présente alors une résistance mécanique satisfaisante.

En pratique, chaque insert 40 comporte au moins un pion 70 disposé dans un orifice 38, et au moins un évidement 68 disposé face à un pion 70 correspondant. Si l'insert 40 comporte un unique pion 70 traversant deux orifices 38, alors un évidement 68 est prévu en face de chaque extrémité de ce pion 70. Pour un fonctionnement optimal de l'invention, chaque insert 40 est traversé par plusieurs pions 70 répartis radialement autour du corps 12, de préférence six pions 70. En alternative, chaque insert 40 peut comporter un nombre différent de pions 70, de préférence un nombre pair dans un but de simplification du perçage des orifices 38, par exemple quatre ou huit pions 70.

En variante non représentée sur les figures 3 à 7, l'extrémité 74 de chaque pion 70 est en saillie radialement hors de l'ensemble composite 30 lorsque la fabrication de l'arbre 10 est terminée. Dans ce cas, l'arbre 10 peut avantageusement comporter des moyens amovibles de blocage réversible de chaque pion 70 dans la zone d'interface 68 et son orifice 58. A titre d'exemple, ces moyens de blocage peuvent être des goupilles et/ou des éléments filetés, qui permettent de maintenir les pions 70 dans les orifices 58. De ce fait, les pions 70 sont amovibles de l'arbre 10 au repos lorsque les moyens de blocage sont débloqués, et l'insert 40 peut alors être retiré de l'arbre 10. Ainsi, chaque insert 40 disposé à l'une des extrémités 16 ou 18 de l'arbre 10 est interchangeable avec un autre insert du même type ou d'un type différent, en fonction de l'application visée pour l'arbre 10. En particulier, le retrait des pions 70 et/ou de l'insert 40 peut être effectué sans déformation substantielle de l'ensemble composite 30 au niveau de la zone d'interface 38, lorsque la matrice 32 est formée et solidifiée. Par conséquent, les enroulements 36 de fibres 34 restent en place même lorsque les pions 70 sont retirés puis de nouveau insérés dans les orifices 58. En pratique, un changement d'insert 40 peut être effectué lors de la fabrication de l'arbre 10 ou après une durée de fonctionnement prolongée de cet arbre 10.

A ce stade, on remarque que lorsque l'un des inserts 40 a été retiré de l'extrémité 16 ou 18 correspondante de l'arbre 10, le tube 20 peut également être retiré de l'arbre 10 en coulissant au niveau de cette extrémité 16 ou 18. En effet, ce tube 20 a principalement pour fonction de servir de support, d'une part, aux fibres 34 lors de leur enroulement et, d'autre part, au moulage de la résine 32 intégrant ces fibres 34, de manière à former l'ensemble composite 30. De ce fait, lorsque l'ensemble composite 30 a été formé, le tube 20 peut être retiré pour alléger l'arbre 10.

En alternative, le tube 20 peut demeurer sur l'arbre 10, de manière à renforcer la résistance mécanique de cet arbre 10.

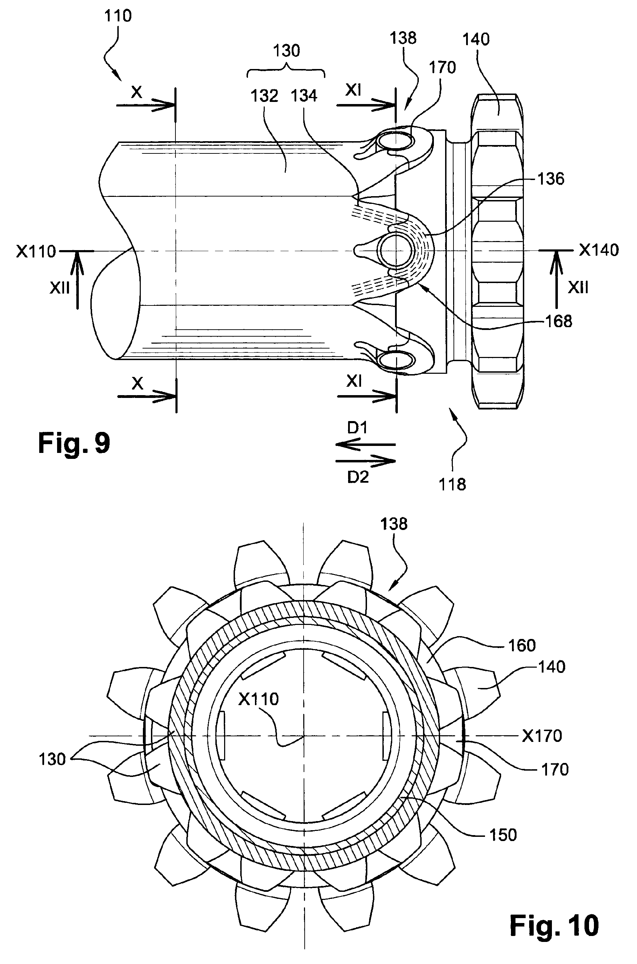

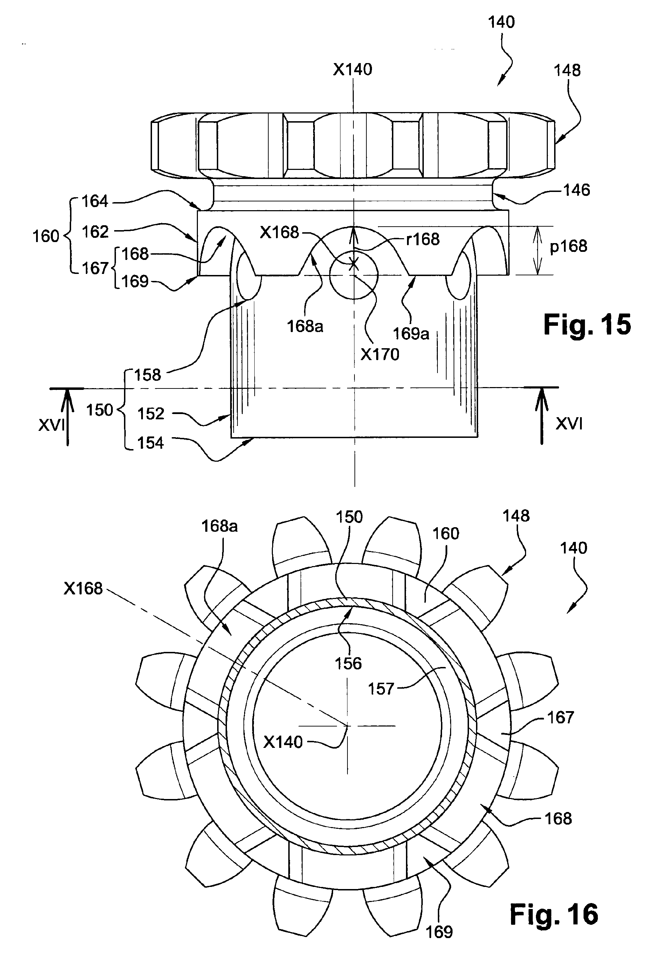

Sur les figures 9 à 16 est représenté un deuxième mode de réalisation d'un arbre de torsion 110 conforme à l'invention.

Certains éléments constitutifs de l'arbre 110 sont analogues aux éléments constitutifs de l'arbre 10 du premier mode de réalisation, décrit plus haut, et portent la même référence numérique, augmentée de cent. Il s'agit du corps 112 allongé suivant l'axe X110 entre les extrémités 116 et 118, de l'ensemble composite 130 incluant une matrice de résine 132 et des fibres 134, avec des enroulements 136 dans la zone d'interface 138, d'un insert 140 d'axe central X140, comportant une partie tubulaire 150 avec une surface cylindrique 152, une surface annulaire radiale 154, un alésage 156 et des orifices 158, et une partie annulaire 160 avec une surface cylindrique 162, une surface annulaire radiale 164, un alésage 166 et un côté 167 muni d'éléments crénelés 168 et 169, dont un évidement 168 présentant une profondeur p 168 et une surface cylindrique concave 168a d'axe X168 et de rayon r168, des pions 170 d'axe X170 comportant une surface cylindrique extérieure 172 et une extrémité saillante 174.

En revanche, l'insert 140, les pions 170 et la zone d'interface 138 présentent certaines différences avec le premier mode de réalisation. Un unique insert 140 est représenté au niveau de l'extrémité 118 de l'arbre 110, l'insert disposé sur l'extrémité 116 n'étant pas représenté.

L'arbre 110 est fabriqué suivant le même procédé que l'arbre 10 du premier mode de réalisation. Les inserts 140 sont positionnés aux extrémités d'un tube métallique, non visible sur les figures 9 à 16, puis les pions 170 traversent les inserts 140 et le tube. Des fibres 134 sont ensuite enroulées en hélice autour du tube, et enroulées autour des pions 170 dans la zone d'interface 138, puis la résine 132 est formée autour du tube. Le corps 112 de l'arbre 110 est ainsi constitué, en incluant l'ensemble composite 130. Le tube métallique peut être retiré ou laisser en place dans l'arbre 110.

En alternative, le corps 112 de l'arbre 110 peut être fabriqué préalablement au positionnement du ou des inserts 140, par le biais d'un outillage de production prévu à cet effet.

L'insert 140 est conformé en engrenage, avec une rainure annulaire 146 et des éléments dentés 148, situés du côté opposé à la partie tubulaire 150 dans la direction axiale X140 de l'insert 140. Au niveau de l'alésage intérieur 156, cette partie tubulaire 150 présente une saillie annulaire 157 traversée par les orifices 158. La profondeur p168 de chaque évidement 168 est supérieure au rayon r168 de la surface 168a. Les contreforts 169 sont conformés en créneaux, avec une surface radiale plane 169a. Dans la zone d'interface 138, l'ensemble composite 130 épouse la forme des évidements 168, entre les contreforts 169.

Les axes X170 des pions 170 sont situés dans un plan, perpendiculaire à l'axe X140, qui est défini par l'ensemble des surfaces 169a. Les pions 170 sont creux, avec un alésage cylindrique intérieur 176.

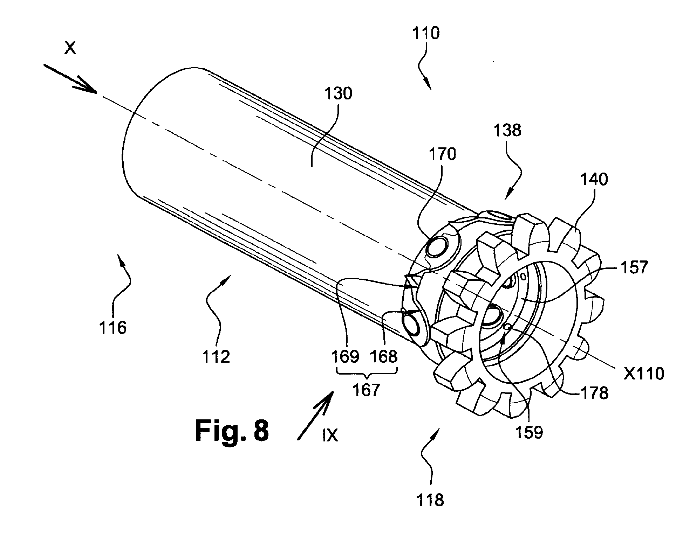

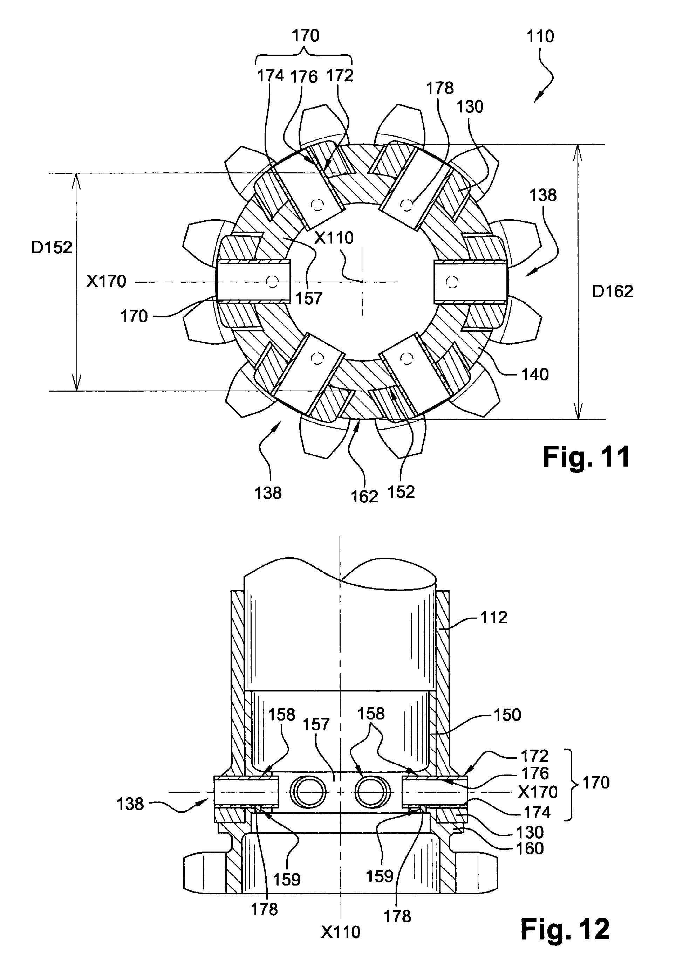

Comme montré aux figures 8 et 12, des orifices 159 sont ménagés, suivant la direction axiale X140, dans la saillie annulaire intérieure 157 de l'insert 140. Des goupilles 178 sont insérées dans ces orifices 159 et coopèrent avec les pions 170 pour les lier à l'insert 140. De préférence, les orifices 159 sont taraudés et les goupilles 178 sont filetées. Lorsqu'une goupille 178 est vissée dans l'orifice taraudé 159, cette goupille 178 appuie sur la surface 172 du pion 170 correspondant, de manière à solidariser ce pion 170 avec l'insert 140.

En variante non représentée, les goupilles 178 peuvent être logées dans un orifice prévu à cet effet dans chaque pion 170, en pénétrant dans l'alésage 174. Dans ce cas, le positionnement angulaire des pions 170 autour de l'axe X170 doit être effectué avec précision.

En d'autres termes, les goupilles 178 constituent des moyens amovibles de blocage réversible des pions 170 dans l'insert 140. Ainsi, l'insert 140 peut être changé pour s'adapter à une application particulière de l'arbre 110, ou bien en cas d'usure. Dans un premier temps, ce changement consiste à débloquer les goupilles 170, retirer chaque pion 170 traversant l'insert 140 dans la zone d'interface 138, et retirer cet insert 140 de l'extrémité 118 de l'arbre 110.

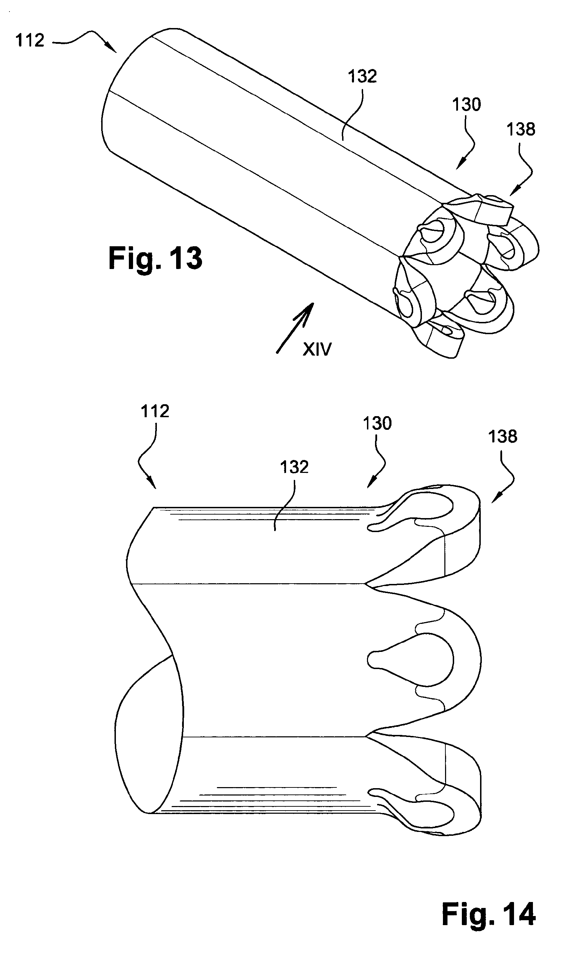

A ce stade, l'extrémité 118 du corps 112 comprenant l'ensemble composite 130 est libre, comme montré aux figures 13 et 14. En particulier, le retrait des pions 170 et/ou de l'insert 140 peut être effectué sans déformation substantielle de l'ensemble composite 130 au niveau de l'extrémité 118 et de la zone d'interface 138, alors que la matrice de résine 132 est solidifiée. Ainsi, les enroulements 136 de fibres 134 restent en place même lorsque les pions 170 sont retirés puis de nouveau insérés dans les orifices 158.

Par la suite, un nouvel insert 140 est disposé à l'extrémité 118 de l'arbre 110, chaque pion 170 précédemment retiré est repositionné dans la zone d'interface 138 à travers le nouvel insert 140, et enfin les goupilles 178 sont repositionnées et bloquées par rapport à chaque pion 170.

En pratique, comme dans le premier mode de réalisation, la bonne tenue mécanique de l'ensemble composite 130 est assurée par la présence de fibres 134 dans la zone d'interface 138, ainsi que par le travail en compression de la résine 32. Lorsque l'arbre 110 est sollicité en torsion, les fibres 134 sont sollicitées en traction suivant une direction D1, ou en compression suivant une direction D2. La configuration des inserts 140, notamment des orifices 158 et des évidements 168, assure une bonne orientation des fibres 134 et un confinement de la résine 132 dans la zone d'interface 138 en cas de sollicitation de l'arbre 110.

En outre, les caractéristiques techniques des différents modes de réalisation peuvent être, en totalité ou pour certaines d'entre elles, combinées entre elles dans la limite de la protection définie par les revendications. Par exemple, les inserts, les éléments crénelés, les pions et/ou les moyens de blocage des pions sur les inserts peuvent présenter des configurations différentes. Ainsi, l'arbre selon l'invention peut être adapté à toute application particulière, notamment en termes de fonctionnalité et de coût.

## Revendications

1. Arbre (10 ; 110) de transmission de mouvements et/ou d'efforts en rotation, comprenant :
- un corps tubulaire (12 ; 112) allongé suivant un axe longitudinal (X10 ; X110) entre deux extrémités (16, 18 ; 116, 118), comportant au moins un ensemble composite (30 ; 130) tubulaire, incluant une matrice plastique (32 ; 132) et des fibres de renfort (34 ; 134),
- au moins un insert (40 ; 140), qui est disposé à l'une des extrémités longitudinales du corps (12 ; 112) et qui est solidarisé mécaniquement avec le corps dans une zone (38 ; 138) d'interface entre l'insert et l'ensemble composite (30 ; 130), et,
- dans la ou chaque zone d'interface (38 ; 138), au moins un pion (70 ; 170) traversant radialement l'insert (40 ; 140) et le corps (12 ; 112),
les fibres de renfort (34 ; 134) entourant au moins partiellement le ou chaque pion (70 ; 170) de sorte que le ou les pions maintiennent en place les fibres de renfort dans la zone d'interface (38 ; 138) lors de la fabrication de l'arbre et/ou lorsque des efforts sont exercés sur l'arbre,
l'arbre (10 ; 110) étant **caractérisé en ce que** le ou chaque insert (40 ; 140) comporte au moins un évidement (68 ; 168), le ou chaque évidement (68 ; 168) recevant au moins une partie (36 ; 136) des fibres de renfort (34 ; 134) entourant le ou l'un des pions (70 ; 170), de manière à maintenir axialement et/ou tangentiellement ces fibres de renfort entre une surface (68a ; 168a) d'élimitant l'évidement (68 ; 168) et le pion (70 ;170) dans la zone d'interface (38 ; 138).

2. Arbre selon la revendication 1, **caractérisé en ce que** le ou chaque insert (40 ; 140) comporte :
- une partie tubulaire (50 ; 150) centrée sur un axe central (X40 ; X140), présentant un premier diamètre extérieur (D52 ; D152), et
- une partie annulaire (60 ; 160) coaxiale à la partie tubulaire, présentant un deuxième diamètre extérieur (D62 ; D162) supérieur au premier diamètre extérieur (D52 ; D152) et dont un côté (67 ; 167) orienté vers la partie tubulaire suivant la direction axiale de l'insert est muni du ou des évidements (68 ; 168).

3. Arbre selon la revendication 2, **caractérisé en ce qu'**au moins un orifice (58 ; 158) de réception d'un pion (70 ; 170) est délimité radialement dans la partie tubulaire (50 ; 150) de l'insert (40 ; 140), et **en ce que**, suivant la direction axiale (X40 ; X140) de l'insert, le ou chaque orifice (58 ; 158) est sensiblement aligné avec le ou l'un des évidements (68 ; 168) ménagés dans la partie annulaire (60 ; 160) de l'insert.

4. Arbre selon l'une des revendications 2 ou 3, **caractérisé en ce que** le ou chaque insert (40 ; 140) comprend des éléments crénelés (68, 69 ; 168, 169), qui incluent le ou les évidements (68 ; 168) et qui sont répartis suivant la périphérie de l'insert, sur le côté de la partie annulaire (60 ; 160) orienté vers la partie tubulaire (50 ; 150).

5. Arbre selon l'une des revendications précédentes, **caractérisé en ce qu'**il comprend des moyens (178) de blocage réversible du ou des pions (70 ; 170) dans la zone d'interface (38 ; 138), **en ce que** le ou les pions (70 ; 170) sont amovibles de l'arbre (10 ; 110) au repos lorsque les moyens de blocage (178) sont débloqués, et **en ce que** le ou chaque insert (40 ; 140) est amovible de l'arbre (10 ; 110) au repos lorsque chaque pion (70 ; 170) traversant cet insert et le corps (12 ; 112) a été retiré de l'arbre.

6. Arbre selon l'une des revendications précédentes, **caractérisé en ce que** le ou chaque insert (40 ; 140) est traversé par plusieurs pions (70 ; 170) répartis radialement autour du corps (12 ; 112), de préférence six pions (70 ; 170).

7. Procédé de fabrication d'un arbre (10 ; 110) de transmission de mouvements et/ou d'efforts en rotation, le procédé comprenant des étapes consistant à :
a) positionner au moins un organe d'extrémité (40 ; 140) à l'une des extrémités (26, 28 ; 126, 128) d'un tube (20 ; 120) ;
b) positionner un ou des pions (70 ; 170) à travers le tube et l'organe d'extrémité dans une zone d'interface (38 ; 138) ;
c) enrouler des fibres de renfort (34 ; 134) autour du tube, en entourant au moins partiellement le ou chaque pion dans la zone d'interface ;
d) former une matrice plastique (32 ; 132) intégrant les fibres de renfort (34 ; 134) autour du tube et dans la zone d'interface où sont situés les pions, de manière à façonner un ensemble composite (30 ; 130) appartenant à l'arbre ;
le procédé étant **caractérisé en ce que** dans l'étape c), les fibres de renfort (34 ; 134) sont enroulées, dans la zone d'interface (38 ; 138), entre chaque pion (70 ; 170) et la surface (38a ; 168a) d'un évidement (68 ; 168) qui est ménagé sur l'organe d'extrémité (40 ; 140) en regard de ce pion (70 ; 170).

8. Procédé selon la revendication 7, **caractérisé en ce que** dans l'étape c), les fibres de renfort (34 ; 134) sont enroulées autour du tube (20 ; 120) en formant une hélice inclinée d'un angle (ß34; ß134) compris entre 20 et 70° par rapport à l'axe longitudinal (X10 ; X110) du tube.

9. Procédé selon la revendication 8, **caractérisé en ce que** dans l'étape c), les fibres de renfort (34 ; 134) sont enroulées autour du tube (20 ; 120) en formant une hélice inclinée d'un angle (ß34 ; ß134) égal à 45° par rapport à l'axe longitudinal (X10 ; X110) du tube.

10. Procédé selon l'une des revendications 7 à 9, **caractérisé en ce qu'**il comprend également une étape e) consistant à :
- retirer le ou les pions (70 ; 170) correspondant au ou à l'un des organes d'extrémité ;
- retirer cet organe d'extrémité de l'arbre (10 ; 110) ; et
- remplacer cet organe d'extrémité par un insert (40 ; 140) adapté à l'arbre.

## Patentansprüche

1. Welle (10, 110) zum Übertragen von Dreh-Bewegungen und/oder -Beanspruchungen, aufweisend:
- einen rohrförmigen Körper (12, 112), der sich entlang einer Längsachse (X10, X110) zwischen zwei Enden (16, 18, 116, 118) erstreckt, der mindestens eine rohrförmige Verbundeinrichtung (30, 130) aufweist, aufweisend eine Kunststoffmatrize (32, 132) und Verstärkungsfasern (34, 134),
- mindestens einen Einsatz (40, 140), der an einem der Längsenden des Körpers (12, 112) angeordnet ist und der in einem Schnittstellenbereich (32, 138) zwischen dem Einsatz und der Verbundeinrichtung (30, 130) mechanisch an dem Körper angebracht ist, und
- in dem oder jedem Schnittstellenbereich (38, 138) mindestens ein Blöckchen (70, 170), das den Einsatz (40, 140) und den Körper (12, 112) radial durchquert,
wobei die Verstärkungsfasern (34, 134) zumindest teilweise das oder jedes Blöckchen (70, 170) umgeben, so dass das oder die Blöckchen die Verstärkungsfasern bei der Herstellung der Welle und/oder wenn Kräfte auf die Welle ausgeübt werden, in dem Schnittstellenbereich (38, 138) an Ort und Stelle halten,
wobei die Welle (10, 110) **dadurch gekennzeichnet ist, dass** der oder jeder Einsatz (40, 140) mindestens eine Aussparung (68, 168) aufweist, wobei die oder jede Aussparung (68, 168) zumindest einen Teil (36, 136) der Verstärkungsfasern (34, 134) aufnimmt, die das oder eines der Blöckchen (70, 170) umgeben, so dass die Verstärkungsfasern zwischen einer Fläche (68a, 168a), die die Aussparung (68, 168) begrenzt, und dem Blöckchen (70, 170) axial und/oder tangential in dem Schnittstellenbereich (38, 138) gehalten werden.

2. Welle gemäß Anspruch 1, **dadurch gekennzeichnet, dass** der oder jeder Einsatz (40, 140) aufweist:
- einen an einer zentralen Achse (X40, X140) zentrierten rohrförmigen Abschnitt (50, 150), der einen ersten Außendurchmesser (D52, D152) hat, und
- einen zu dem rohrförmigen Abschnitt koaxialen ringförmigen Abschnitt (60, 160), der einen zweiten Außendurchmesser (D62, D162) hat, der größer als der erste Außendurchmesser (D52, D152) ist, und dessen eine Seite (67, 167), die entlang der Axialrichtung des Einsatzes in Richtung zu dem rohrförmigen Abschnitt ausgerichtet ist, mit der oder den Aussparungen (68, 168) ausgestattet ist.

3. Welle gemäß Anspruch 2, **dadurch gekennzeichnet, dass** mindestens eine Öffnung (58, 158) zum Aufnehmer eines Blöckchens (70, 170) radial in dem rohrförmigen Abschnitt (50, 150) des Einsatzes (40, 140) begrenzt ist, und dass die oder jede Öffnung (58, 158) entlang der Axialrichtung (X40, X140) des Einsatzes im Wesentlichen zu der oder einer der Aussparungen (68, 168) ausgerichtet ist, die in dem ringförmigen Abschnitt (60, 160) des Einsatzes vorgesehen sind.

4. Welle gemäß einem der Ansprüche 2 oder 3, **dadurch gekennzeichnet, dass** der oder jeder Einsatz (40, 140) Zahnelemente (68, 69; 168, 169) aufweist, die die Aussparung oder die Aussparungen (68, 168) aufweisen und die entlang dem Umfang des Einsatzes verteilt sind, auf der Seite des ringförmigen Abschnitts (60, 160), die in Richtung zu dem rohrförmigen Abschnitt (50, 150) ausgerichtet ist.

5. Welle gemäß einem der vorhergehenden Ansprüche,
**dadurch gekennzeichnet, dass** sie Mittel (178) zum reversiblen Blockieren des oder der Blöckchen (70, 170) in dem Schnittstellenbereich (38, 138) aufweist, dass das oder die Blöckchen (70, 170) im Ruhezustand von der Welle (10, 110) lösbar sind, wenn die Blockiermittel (178) freigegeben sind, und dass der oder jeder Einsatz (40, 140) im Ruhezustand von der Welle (10, 110) lösbar ist, wenn jedes Blöckchen (70, 170), das den Einsatz und den Körper (12, 112) durchquert, aus der Welle zurückgezogen wurde.

6. Welle gemäß einem der vorhergehenden Ansprüche,
**dadurch gekennzeichnet, dass** der oder jeder Einsatz (40, 140) von mehreren Blöckchen (70, 170), vorzugsweise von sechs Blöckchen (70, 170) durchquert wird, die radial um den Körper (12, 112) verteilt sind.

7. Verfahren zum Herstellen einer Welle (10, 110) zum Übertragen von Dreh-Bewegungen und/oder -Beanspruchungen, wobei das Verfahren Schritte aufweist, bestehend aus:
a) Positionieren von mindestens einem Endelement (40, 140) an einem der Enden (26, 28, 126, 128) eines Rohres (20, 120),
b) Positionieren von einem Blöckchen oder Blöckchen (70, 170) durch das Rohr und das Endelement hindurch in einem Schnittstellenbereich (38, 138),
c) Aufwickeln von Verstärkungsfasern (34, 134) um das Rohr herum unter wenigstens teilweise Umgeben des oder jedes Blöckchen in dem Schnittstellenbereich,
d) Ausbilden einer die Verstärkungsfasern (34, 134) integrierenden Kunststoffmatrize (32, 132) um das Rohr herum und in dem Schnittstellenbereich, wo die Blöckchen angeordnet sind, so dass eine Verbundeinrichtung (30, 130) ausgebildet wird, die zu der Welle gehört,
wobei das Verfahren **dadurch gekennzeichnet ist, dass** im Schritt c) die Verstärkungsfasern (34, 134) in dem Schnittstellenbereich (38, 138) zwischen jedem Blöckchen (70, 170) und der Fläche (38a, 168a) einer Aussparurg (68, 168) aufgewickelt werden, die an dem Endelement (40, 140) gegenüber von dem Blöckchen (70, 170) angeordnet ist.

8. Verfahren gemäß Anspruch 7, **dadurch gekennzeichnet, dass** in Schritt c) die Verstärkungsfasern (34, 134) um das Rohr (20, 120) herum aufgewickelt werden, wobei sie eine Helix ausbilden, die bezüglich der Längsachse (X10, X110) des Rohres in einem Winkel (β34, β134) von zwischen 20° und 70° geneigt ist.

9. Verfahren gemäß Anspruch 8, **dadurch gekennzeichnet, dass** im Schritt c) die Verstärkungsfasern (34, 134) um das Rohr (20, 120) aufgewickelt werden, wobei sie eine Helix ausbilden, die bezüglich der Längachse (X10, X110) des Rohres um einen Winkel (β34, β134) von 45° geneigt ist.

10. Verfahren gemäß einem der Ansprüche 7 bis 9,
**dadurch gekennzeichnet, dass** es ferner einen Schritt e) aufweist, bestehend aus:
- Zurückziehen des oder der Blöckchen (70, 170) entsprechend dem oder einem der Endelemente,
- Zurückziehen des Endelements von der Welle (10, 110), und
- Ersetzen des Endelements durch einen Einsatz (40, 140), der an die Welle angepasst ist.

## Claims

1. A transmission shaft (10; 110) transmitting rotational movements and/or forces, comprising:
- a tubular body (12; 112) elongated along a longitudinal axis (X10; X110) between two ends (16, 18; 116, 118), comprising at least one tubular composite assembly (30; 130), including a plastic matrix (32; 132) and strengthening fibers (34; 134),
- at least one insert (40; 140), which is positioned at one of the longitudinal ends of the body (12; 112) and which is mechanically secured to the body in an interface area (38; 138) between the insert and the composite assembly (30; 130), and
- in the or each interface area (38; 138), at least one slug (70; 170) passing radially through the insert (40; 140) and the body (12; 112),
the strengthening fibers (34; 134) at least partially surrounding the or each slug (70; 170) such that the slug(s) keep the strengthening fibers in place in the interface area (38; 138) during the manufacture of the shaft and/or when forces are exerted on the shaft,
the shaft (10; 110) being **characterized in that** the or each insert (40; 140) comprises at least one recess (68; 168), the or each recess (68; 168) receiving at least one part (36; 136) of the strengthening fibers (34; 134) surrounding the or one of the slugs (70; 170), so as to axially and/or tangentially maintain said strengthening fibers between a surface (68a ; 168a) delimiting the recess (68 ; 168) and the slug (70 ; 170) in the interface area (38; 138).

2. The shaft according to claim 1, **characterized in that** the or each insert (40; 140) comprises:
- a tubular portion (50; 150) centered on a central axis (X40; X140), having a first outer diameter (D52; D152), and
- an annular portion (60; 160) coaxial to the tubular portion, having a second outer diameter (D62; D162) larger than the first outer diameter (D52; D152) and whereof one side (67; 167) oriented toward the tubular portion in the axial direction of the insert is provided with the recess(es) (68; 168).

3. The shaft according to claim 2, **characterized in that** at least one opening (58; 158) for receiving a slug (70; 170) is radially defined in the tubular portion (50; 150) of the insert (40; 140), and **in that**, in the axial direction (X40; X140) of the insert, the or each opening (58; 158) is substantially aligned with the or one of the recesses (68; 168) formed in the annular portion (60; 160) of the insert.

4. The shaft according to one of claims 2 or 3, **characterized in that** the or each insert (40; 140) comprises toothed elements (68, 69; 168, 169), which include the recess(es) (68; 168) and which are distributed along the periphery of the insert, on the side of the annular portion (60; 160) oriented toward the tubular portion (50; 160).

5. The shaft according to one of the preceding claims, **characterized in that** it comprises reversible locking means (178) for locking the slug(s) (70; 170) in the interface area (38; 138), **in that** the slug(s) (70; 170) can be removed from the shaft (10; 110) when it is idle the locking means (178) are unlocked, and **in that** the or each insert (40; 140) can be removed from the shaft (10; 110) when it is idle when each slug (70; 170) passing through said insert and the body (12; 112) have been removed from the shaft.

6. The shaft according to one of the preceding claims, **characterized in that** the or each insert (40; 140) is passed through by several slugs (70; 170) radially distributed around the body (12; 112), preferably six slugs (70; 170).

7. A method for manufacturing a transmission shaft (10; 110) for transmitting rotational movements and/or forces, the method comprising the following steps:
a) positioning at least one end member (40; 140) at one of the ends (26, 28; 126, 128) of a tube (20; 120);
b) positioning one or several slugs (70; 170) through the tube and each end member in an interface area (38; 138);
c) winding strengthening fibers (34; 134) around the tube, at least partially surrounding the or each slug in the interface area;
d) forming a plastic matrix (32; 132) incorporating the strengthening fibers (34; 134) around the tube and the interface area where the slugs are located, so as to produce a composite assembly (30; 130) belonging to the shaft;
the method being **characterized in that** in step c), the strengthening fibers (34; 134) are wound, in the interface area (38; 138), between each slug (70; 170) and the surface (68a; 168a) of a recess (68; 168) that is formed on the end member (40; 140) opposite said slug (70; 170).

8. The method according to claim 7, **characterized in that** in step c), the strengthening fibers (34; 134) are wound around the tube (20; 120) forming a helix inclined by an angle (ß34; ß134) comprised between 20 and 70° relative to the longitudinal axis (X10; X110) of the tube.

9. The method according to claim 8, **characterized in that** in step c), the strengthening fibers (34; 134) are wound around the tube (20; 120) while forming a helix inclined by an angle (ß34; ß134) equal to 45° relative to the longitudinal axis (X10; X110) of the tube.

10. The method according to one of claims 7 to 9, **characterized in that** it also comprises a step e) consisting of:
- removing the slug(s) (70; 170) corresponding to the or one of the end members;
- removing said end member from the shaft (10; 110); and
- replacing said end member with an insert (40; 140) adapted to the shaft.
